# FASCICULE DE BREVET EUROPEEN

(11) **EP 3 433 344 B1**
(45) Date de publication et mention de la délivrance du brevet: **03.03.2021**
(21) Numéro de dépôt: 17712136.5
(22) Date de dépôt: 21.03.2017
(51) Int. Cl.: C10M 173/02, C10M 173/00

(54) **COMPOSITION LUBRIFIANTE AQUEUSE**
WÄSSRIGE SCHMIERSTOFFZUSAMMENSETZUNG
WATER BASED LUBRICANT COMPOSITION

(30) Priorité: 25.03.2016 BE 201605215; 09.05.2016 BE 201605325
(43) Date de publication de la demande: 30.01.2019
(73) Titulaire: Sopura S.A., 6180 Courcelles (BE)
(72) Inventeur: BOUGARD, François, 7100 La Louviere (BE); VANHELLEPUTTE, Philippe, 7110 Houdeng-Aimeries (BE); DAVID LOGHMANIAN, Armelle, 2440 Geel (BE); STACHURA, Pierre, 7134 Leval (BE)
(74) Mandataire: Pronovem
(86) Numéro de dépôt international: PCT/EP2017/056669
(87) Numéro de publication internationale: WO 2017/162654

(56) Documents cités:
- DE-A1- 4 244 536
- US-A- 4 929 375
- P Stachura: "InnovaTech fête ses 10 ans ce 24 septembre 2012 et présente 50 innovations wallonnes !", InnovaTech, 24 septembre 2012 (2012-09-24), page 1,14, XP055276878, http://www.innovatech.be Extrait de l'Internet: URL:http://www.innovatech.be/upload/espace _innovation/Dossiers/10_ans_-_50_innovatio ns.pdf [extrait le 2016-06-01]

## Description

### Objet de l'invention

La présente invention se rapporte à une nouvelle composition lubrifiante, à son procédé d'obtention et son utilisation pour la lubrification, mais également le nettoyage et la désinfection, de moyens de transport utilisés dans l'industrie alimentaire, en particulier des bandes de transport utilisées dans l'industrie alimentaire, plus particulièrement des bandes de transport de contenants de boisons, en particulier des bouteilles en verre ou en plastique ou de canettes.

### Arrière-plan technologique à la base de l'invention

Dans l'industrie de la boisson, il est bien connu de conditionner des boissons dans des contenants, tels que des barils ou canettes en plastique ou en métal, des bouteilles en verre ou en plastique, en particulier en polyéthylène téréphtalate (PET) ou polycarbonate (PC), au cours d'un procédé de production durant lequel différentes unités de production effectuent différentes étapes, comme par exemple la sortie de l'emballage, le lavage des contenants, le remplissage des contenants, la fermeture des contenants, l'étiquetage des contenants et l'emballage des contenants. Généralement, les contenants sont transportées d'une unité à l'autre, par des moyens de transport, en particulier des bandes de transport, qui peuvent comprendre, ou être constitués de, différents matériaux métalliques, tels que de l'acier, de l'inox ou des matériaux polymériques comme le polyoxyméthylène (POM commercialisé sous la marque DELRIN®).

Afin de permettre le déplacement des contenants sur des bandes de transport, sans que cela provoque des chutes, et pour minimiser les forces de frictions inhérentes à tout mouvement, une solution, dite lubrifiante, est appliquée sur la bande de transport, soit par immersion ou par aspersion. Généralement, la solution lubrifiante est une solution aqueuse contenant des composés chimiques hydrophobes capables de migrer à l'interface de la bande de transport pour former ainsi un film. Ce film est à l'origine des propriétés de glisse du lubrifiant.

Par conséquent, une composition lubrifiante efficace, en particulier une composition de lubrification de bandes de transport de contenants de boisson, doit répondre à un cahier des charges précis. Une composition lubrifiante doit surtout diminuer les forces de frictions inhérentes à la mise en mouvement des contenants sur les bandes, car une mauvaise lubrification, et donc une friction trop importante, peut conduire à la chute du contenant. A l'inverse, une lubrification trop importante empêche les contenants de boisson d'avancer et peut conduire à une détente des bandes de transport. Un autre point critique consiste en la stabilité des contenants, en particulier des bouteilles.

De plus, la composition lubrifiante doit pouvoir être appliquée sur les moyens de transport, soit d'une façon dite « intermittente » ou soit d'une façon dite « continue ». Une application dite « intermittente » consiste en une phase de conditionnement des moyens de transport par une application de la composition lubrifiante pendant une durée de l'ordre de 20 minutes, suivie par une aspersion discontinue de la même composition pendant une durée d'environ 15 secondes toute les 85 secondes. Une application dite « continue » correspondant à une aspersion de la composition lubrifiante pendant une durée d'environ 30 secondes, suivie d'une coupure d'environ 30 secondes.

En outre, cette composition lubrifiante aqueuse doit être stable pour une utilisation dans différentes conditions d'application. En effet, différent type d'eaux avec différentes duretés peuvent être utilisées, c'est à dire des eaux dures (>30°fH (ou degré français), des eaux douces (<10°fH (ou degré français) et des eaux à dureté intermédiaire.

De même, la température est un paramètre critique. Une composition lubrifiante efficace doit être stable à une température comprise entre environ 5°C et environ 40°C. Ce point est d'autant plus important qu'une instabilité peut conduire à une précipitation de la composition lubrifiante et à des phénomènes d'encrassement des conduites ou buses et de diverses pièces utiles à la lubrification ou au déplacement des bandes de transport.

De préférence, une composition lubrifiante efficace, en particulier sous la forme d'un concentré, doit aussi être compatible avec les matériaux constituants les moyens de transport, sur laquelle elle est appliquée, c'est à dire être compatible avec de l'acier, de l'inox, ou des guides et bandes en matériaux polymériques. De plus, les moyens de transport, en particulier les bandes de transport, étant potentiellement en contact avec des boissons, il est indispensable que ladite composition lubrifiante puisse répondre aux normes d'hygiène adéquates.

Des traitements désinfectants doivent régulièrement être appliqués sur les moyens de transport pour réduire, ou supprimer, la prolifération de germes. Les désinfections les plus appropriées sont obtenues par l'emploi d'oxydants, par exemple des compositions à base, ou comprenant, de l'eau oxygénée ou du dioxyde de chlore. Par conséquent, il peut être avantageux de disposer d'une composition lubrifiante apte à nettoyer et/ou désinfecter les moyens de transport. Il est donc avantageux que la composition lubrifiante efficace, soit éventuellement biocide, et surtout qu'elle soit compatible avec l'application de telles molécules biocides, tout en étant non ou peu toxique pour l'humain ou l'animal.

Comme l'intérieur du contenant, en particulier d'une bouteille, peut être contaminé par la composition lubrifiante, il peut être avantageux que cette dernière ne modifie pas, les propriétés organoleptiques du produit contenu dans le contenant, et, de plus, présente des propriétés toxicologiques optimales afin de réduire son éventuel impact délétère sur l'environnement, en présentant l'avantage de ne pas nécessiter l'emploi excessif de matières premières ou d'eau, mais également en n'induisant pas une forte toxicité sur les micro-organismes présents dans les stations d'épuration vers lesquelles sont acheminées les compositions lubrifiantes après nettoyage des bandes de transport.

### Etat de la technique

Les compositions lubrifiantes actuellement utilisées sont des solutions d'acides gras, généralement comprenant entre 12 et 18 atomes de carbones, sous une forme soluble d'alkali ou bien encore sous forme d'alkanol-amine. Il est connu d'utiliser ces composés sous forme d'une émulsion, c'est-à-dire un système homogène constitué par la dispersion d'une phase grasse stabilisée dans une matrice aqueuse par des émulsifiants.

De tels savons d'acides gras, partiellement ou complètement neutralisés en solution aqueuse, comme par exemple l'oléate de calcium, sont connus pour être sensibles à la dureté de l'eau et pour former des sels d'acide gras insolubles, ce qui influence négativement leur pouvoir glissant. Ainsi, il apparait que la performance de ces savons varie en fonction du pH et de la dureté de l'eau de dilution utilisée.

Ainsi, pour remédier à ces inconvénients, il est possible soit de leur y adjoindre un ou plusieurs chélateurs, par exemple des dérivées de l'acide acétique tel que l'acide ethylendiaminotetraacetique (EDTA), qui présentent l'avantage d'être biodégradables, soit de n'utiliser que de l'eau adoucie.

De plus, ces savons, qui ont tendance à réagir avec le dioxyde de carbone dissout dans la solution d'application, présentent également l'inconvénient de constituer un milieu propice à la croissance des germes et présentent l'inconvénient de former une mousse abondante.

En outre, ces savons peuvent également être incompatibles avec certains matériaux dont sont faits les supports à traiter et des phénomènes de corrosion métallique desdits supports sont possibles.

Une seconde solution proposée dans l'état de la technique est basée sur l'application d'émulsions lubrifiantes de type huile dans l'eau, qui sont constituées d'une dispersion d'acide gras mono, di ou tri glycéride dans une matrice aqueuse en présence d'émulsifiants.

Les demandes internationales de brevet WO93/11865 et WO2008/032284 décrivent l'utilisation d'émulsions et l'impact de la dimension des microgouttelettes d'huile dispersée, le type d'émulsifiant, les tensioactifs anioniques ou le type de phase « grasse » à utiliser (acide gras oléique, mono/di/triglycéride) sur la stabilité des solutions d'emploi.

Cependant, comme ces émulsions sont, de par leur nature, thermodynamiquement instables, elle peuvent se déphaser. Cela conduit à une perte d'efficacité d'une éventuelle solution lubrifiante incorporant ces émulsions, mais aussi à un possible encrassement des bandes transporteuses, des conduites d'aspiration ou des buses d'aspiration et donc à une éventuelle prolifération biologique dans ces zones d'encrassement.

Une troisième solution connue de l'état de la technique consiste à utiliser des amines grasses primaires neutralisées ou des diamines, ayant à la fois des propriétés de lubrification et une action biocide. Les amines dites « amines grasses » sont des amines liées à une chaîne hydrocarbonée, de plus de 8 atomes de carbone et généralement de moins de 22 atomes de carbone, souvent dérivées de matières naturelles renouvelables telles que le suif, des stéarines ou des oléines d'huiles végétales, comme le colza, l'huile de palme, le palmiste , le soja ou le coprah. Les amines primaires sont souvent présentes sous forme de mélange et comportent habituellement entre 12 atomes et 18 atomes de carbone répartis dans une chaine hydrocarbonée incluant plus de 10% d'insaturation. Sont également connus des lubrifiants basés sur des dérivés d'amines grasses N-alkylées contenant au moins une amine secondaire et/ou une amine tertiaire.

Par exemple, la demande de brevet US2004/0053793 décrit une composition lubrifiante constituée par le mélange d'un sel acétate d'une diamine, d'un agent de solidification constitué d'un polymère de polyalkylene glycol et d'un surfactant anionique, afin de pouvoir disposer d'un agent de lubrification disponible sous forme solide ou liquide. Même si les amines grasses sont peu stables, elles sont aussi moins couteuses que les savons et contrairement aux savons, sont très peu sensibles à la dureté de l'eau utilisée. Il est aussi connu que de nombreuses molécules tensioactives conventionnelles présentes dans des compositions lubrifiantes ont un rôle négatif sur les propriétés de glissance, à savoir un abaissement du coefficient de friction.
La demande de brevet DE4244536-A1 décrit une composition lubrifiante pour des bandes transporteuses de bouteilles et qui comprend 83% en poids d'eau, une amine grasse, un acide organique et des dispersants.
Un premier agent de solubilisation constitué par une amine alkyle tertiaire de 8 à 10 atomes de carbone, un acide gras de 12 à 22 atomes de carbone et un second agent de solubilisation constitué par un sulfonate d'alkyle aryle ou un agent séquestrant.

### Buts de l'invention

La présente invention vise à fournir une nouvelle composition lubrifiante qui ne présente pas les inconvénients des compositions de l'état de la technique.

En particulier, la présente invention vise à fournir une composition lubrifiante efficace et stable, en particulier une composition lubrifiante pas ou peu sensible à la dureté de l'eau utilisée comme solvant, et en particulier adaptée à la dureté de tout type d'eau de ville qui peut être fort variable et de préférence adaptée à tout type d'application, en particulier adaptée pour une application par une pulvérisation, en continu et de manière intermittente ou discontinue.

Un but particulier est l'obtention d'une telle composition lubrifiante, qui soit simple d'emploi et qui présente une stabilité adéquate pour une application dans la lubrification de bandes transporteuses de contenants de boissons et qui puisse aussi conserver des bandes transporteuses lubrifiantes pendant un durée prolongée, même en cas de coupure de cette application de la composition lubrifiante de l'invention.

Un autre but de la présente invention est d'obtenir une composition lubrifiante qui présente un impact sur (ne soit pas nocive pour) le traitement des eaux réduit, qui soit peu toxique, en particulier sur les microorganismes présents dans les stations d'épuration

Un but complémentaire à l'invention est d'obtenir une composition lubrifiante compatible avec un contact avec des contenants de produits alimentaires, tels que des bouteilles, des barils et des cannettes aptes à contenir des boissons.

### Eléments caractéristiques de l'invention

La présente invention est une composition lubrifiante, de préférence sous la forme d'une micro-émulsion dans un solvant aqueux et comprenant :
- de 0,1 % à 10% en poids d'un ou plusieurs premier(s) acide(s) organique(s), le dit premier acide organique étant un acide gras contenant de 4 atomes de carbone à 18 atomes de carbone, plus particulièrement de 6 atomes de carbone à 12 atomes de carbone,
- de 1 % à 10% en poids d'une amine grasse contenant 10 atomes de carbone à 26 atomes de carbone,
- de 0,1 % à 5 % en poids d'un correcteur d'acidité, qui est une base choisie parmi le groupe constitué par NaOH, du KOH et leur mélange,
- de 0.1 % à 10% en poids d'un dispersant,
- de 0.1 % à 10% en poids d'un second acide organique,
- de 0.1 % à 10 % en poids d'un solvant organique et
- d'environ 50 % à environ 98,5 % en poids d'eau ou d'une solution aqueuse, ces pourcentages étant calculés en poids pour obtenir une composition lubrifiante correspondant à 100% en poids.

Avantageusement, dans la composition lubrifiante selon l'invention, le rapport entre l'acide gras et l'amine grasse est compris entre 1/9 (10 acide gras /90 amine grasse), de préférence de 2/8 (20 acide gras/80 amine grasse) ou 3/7 (30 acide gras /70 amine grasse) à 1/1 (50 acide gras/50 amine grasse) en poids entre l'acide gras et l'amine grasse.

Dans la composition lubrifiante de l'invention, l'acide gras est de préférence choisi parmi le groupe constitué par l'acide octanoïque, l'acide decanoïque, l'acide hexanoique, l'acide laurique et l'acide sebacique et leur mélange.

Selon une variante d'exécution de l'invention, l'amine grasse est choisie parmi le groupe constitué par les monoamines, les polyamines, de préférence les diamines, et un mélange d'entre-elles.

Avantageusement, dans la composition lubrifiante de l'invention, l'amine grasse comprends de 10 atomes de carbone à 26 atomes de carbone, de préférence de 12 atomes de carbone à 22 atomes de carbone et est de préférence choisie parmi le groupe constitué par l'amine lauryle, l'amine oleyle, la N-Oleyl-1, 3-diaminopropane, la N-Lauryl-1,3-diaminopropane.et un mélange d'entre elles.

Dans la composition lubrifiante de l'invention, le dispersant est de préférence choisi parmi le groupe constitué par les dispersants neutres ou anioniques.

En particulier, dans la composition lubrifiante de l'invention, ledit dispersant est choisi parmi le groupe constitué par du polysorbate, un alcool ethoxylé et carboxylé, un acide gras ethoxylé, un poly (ethyleneoxide) carboxylate, un ester carboxylique, en particulier un ester de saccharose ou un mélange d'entre eux.

De préférence dans la composition lubrifiante de l'invention, le solvant organique est choisi parmi le groupe constitué par l'ethyle lactate, le glycol comme (di)ethylene glycol, (di)propylene glycol ou butylene glycol, l'alcool, comme butyl glycol, 2-ethylhexanol, glycerol, et un mélange d'entre eux.

En outre, dans la composition lubrifiante de l'invention, le second acide organique est choisi parmi le groupe constitué par l'acide citrique, l'acide acétique, l'acide propionique, l'acide lactique et un mélange d'entre eux.

La composition lubrifiante de l'invention peut aussi comprendre un correcteur d'acidité qui est une base choisie parmi le groupe constitué par NaOH, du KOH et un mélange d'entre elles.

De préférence, la composition lubrifiante de l'invention est limpide à température ambiante pendant une durée de plus de 48 heures.

Un autre aspect de l'invention, concerne l'utilisation de la composition lubrifiante de l'invention pour la lubrification de bandes transporteuses et éventuellement de guides, d'un système de transport ou convoyeur de contenants de boissons ou un procédé de lubrification desdites bandes transporteuses et éventuellement desdits guides dudit système de transport ou convoyeur desdits contenants de boissons, par pulvérisation de la composition lubrifiante de l'invention sur ces bandes transporteuses et éventuellement sur ces guides dudit système de transport.

Selon l'invention, les contenants de boissons sont de préférence choisis parmi le groupe constitué par des bouteilles, des barils ou des cannettes, de différentes matières, tel que du polyéthylene terephthalate (PET), du polyethylene naphthalate, du polycarbonate (PC), du verre ou du métal, tandis que les matières des bandes transporteuses ou des guides sont choisies parmi le groupe constitué par de l'acier, de l'inox ou de matières plastiques tel que du polyoxyméthylène (POM).

Avantageusement, ladite composition lubrifiante de l'invention est administrée par pulvérisation de manière continue ou de manière intermittente ou discontinue sur ce support, en particulier sur lesdites bandes transporteuses et lesdits guides.

Selon une forme d'exécution préférée de l'invention, ladite pulvérisation s'effectue selon l'alternance suivante:
- pulvérisation d'une solution de la composition lubrifiante de l'invention à environ 0,7% appliquée pendant une durée comprise entre environ 10 secondes et environ 50 secondes, de préférence entre environ 20 secondes et environ 40 secondes,
- absence de pulvérisation pendant une durée comprise entre environ 10 secondes et environ 50 secondes, de préférence entre environ 20 secondes et environ 40 secondes,
- pulvérisation d'une solution de la composition lubrifiante de l'invention à environ 0,4% pendant une durée comprise entre environ 5 secondes et environ 30 secondes, de préférence entre environ 10 secondes et environ 20 secondes et
- absence de pulvérisation pendant une durée comprise entre environ 50 secondes et environ 120 secondes, de préférence entre environ 70 secondes et environ 100 secondes.

La présente invention est décrite ci-dessous dans des exemples présentés à titre d'illustrations non limitatives de formes d'exécutions préférées de l'invention.

### Description détaillée de l'invention

La présente invention concerne une composition lubrifiante pour bandes transporteuses de contenants utilisés dans les industries alimentaires, en particulier dans l'industrie de la boisson, lesdits contenants étant par exemple des bouteilles, des barils ou des cannettes à nettoyer ou à remplir, c'est-à-dire une composition lubrifiante facilitant le passage et le déplacement des dits contenants sur les bandes transporteuses et contre d'autres dispositifs, tels que des guides, d'un système de transport de ces contenants.

Le caractère novateur de cette invention repose sur une combinaison avantageuse au sein d'une nouvelle composition de plusieurs éléments interagissant de façon synergique pour former une composition lubrifiante efficace, mais réduite en amine(s) grasse(s), tout en formant une solution stable et limpide, lorsqu'elle est conservée, de préférence sans agitation et à une température comprise entre environ 4°C et environ 40°C, pendant une durée de plus de 48 heures, de préférence de plus que 72 heures ou même plus que 100 heures.

Avantageusement, la composition lubrifiante de l'invention correspond à une solution vraie, de préférence sous la forme d'une micro-émulsion, contenant les différents éléments dissous dans un solvant adéquat, en particulier un solvant aqueux, tel que de l'eau de ville, disponible à différentes duretés, et formant cette solution, quel que soit son degré de dureté de l'eau utilisée. De préférence, cette solution aqueuse est essentiellement et avantageusement limpide et stable, c'est-à-dire exempte de phénomène déphasage pendant plus de 48 heures, de préférence pendant plus de 72 heures. Cette solution réponds avantageusement aux conditions, telles que définies précédemment. En effet, la composition selon l'invention permet de créer de manière inattendue un complexe électrostatique entre les charges anioniques du ou des acide(s) gras et les charges cationiques de la ou des amine(s) grasse(s) partiellement neutralisée(s). Dans la composition selon l'invention, l'amine ou les amines favorise(nt) la dispersion du complexe acide gras-amine grasse.

La composition lubrifiante de l'invention constitue une nette amélioration par rapport aux produits actuellement proposés basés sur l'utilisation massive de ces amines grasses qui sont potentiellement toxiques et faiblement dégradables par des microorganismes et peuvent impacter les stations d'épurations. De plus, les inventeurs ont découvert de manière inattendue que contrairement aux compositions de l'état de la technique, la composition de l'invention conserve son caractère lubrificateur pendant une durée prolongé. En particulier, les inventeurs ont observés que des bandes transporteuses maintenues dans une atmosphère humide conservent une lubrification efficace pendant plusieurs heures, en particulier plus de 24 heures, après une coupure de l'application de la composition lubrifiante de l'invention sur ces bandes transporteuses. Cette caractéristique est particulièrement avantageuse, car elle permet de traiter ce problème de coupure de l'application ou modifier les conditions de cette application sans perturber le déplacement de ces bandes transporteuses et déplacement efficace des contenants de boissons.

La composition lubrifiante selon l'invention peut comprendre de préférence:
a) de 0.1% à 10%, en poids, d'un premier acide organique correspondant un acide gras à courte ou moyenne chaine, c'est-à-dire un acide gras comprenant peu d'atomes de carbone, de préférence entre 4 atomes et 18 atomes de carbone, en particulier un acide gras à courte chaine comprenant 6 atomes à 12 atomes de carbone, de préférence ledit acide gras étant choisi parmi le groupe constitué par l'acide octanoïque, l'acide decanoïque, l'acide hexanoique, l'acide laurique, l'acide cebasique et leur mélange ;
b) de 1% à 10%, en poids, d'une amine grasse, de préférence une mono amine, ou une diamine comprenant de 10 atomes à 26 atomes de carbone (C10-C26), de préférence de 12 atomes à 22 atomes de carbone (C12-C22) de préférence choisi parmi l'amine lauryle, l'amine oleyle, la N-Oleyl-1,3-diaminopropane, la N-Lauryl-1,3-diaminopropane et leur mélange
c) jusqu'à 5%, de préférence de 0.1% à 5%, en poids, d'une ou de plusieurs molécule(s) tensioactive(s), d'un ou de plusieurs dispersant(s), d'un ou de plusieurs surfactant(s), d'un ou de plusieurs émulsifiant(s), de préférence une molécule tensio-active, un dispersant, un surfactant ou un émulsifiant de type alimentaire ou compatible avec des aliments et non nocif ou non toxique pour l'animal, y compris l'humain, avantageusement ladite molécule tensio-active, le dit dispersant, le dit surfactant ou ledit émulsifiant est de type neutre ou de type anionique, de préférence choisi(s) parmi le groupe constitué par du polysorbate, des alcools gras éthoxylés et carboxylés, le poly(ethylene oxide) carboxylate commercialisé par CLARIANT ® sous la marque EMULSOGEN ® et de l'ester de saccharose;
d) de 0.1% à 5%, en poids d'un correcteur d'acidité, de préférence du KOH ou du NaOH ou un mélange de ces bases, afin que la solution obtenue possède un pH compris entre environ 6 et environ 8, de préférence un pH de l'ordre de 7;
e) de 0.1% à 10% d'un ou plusieurs solvant(s) organique(s), de préférence choisi(s) parmi le groupe constitué par un ethyle lactate, un glycol, un polyol, un alcool et un mélange d'entre eux ;
f) de 0.1 % à 10% d'un second acide organique, de préférence un second acide organique choisi parmi le groupe constitué par l'acide acétique, l'acide citrique, l'acide propionique, l'acide lactique et un mélange d'entre eux ; et
g) un % adéquat, compris entre 50% et 98,5% en poids de préférence entre 60% et 98.5% en poids d'eau pour obtenir un % total de 100% en poids de la composition lubrifiante.

Avantageusement, la molécule tensioactive, le dispersant, le surfactant ou l'émulsifiant utilisé(s) dans la composition de l'invention peut être, ou peut comprendre du polysorbate, des sulfates, des sulfonates, des sulfosuccinates, des esters sulfonatés, des amides sulfonatés, des phosphates d'esters, des carboxylates anioniques, en particulier du dioctyl sodium sulfosuccinate, du sodium lauryl sulfate ou un mélange d'entre eux. La molécule tensioactive non ionique, peut-être, ou peut comprendre, des alkylphénols ethoxylés, des alcools aliphatiques ethoxylés ou des esters carboxyliques, en particulier un ester de saccharose.

La composition de l'invention peut aussi comporter d'autres substances habituellement présentes dans des compositions lubrifiantes, tel qu'un agent de stabilisation, un agent biocide, en particulier un agent inhibiteur de biofilms, un anti-oxidant, une molécule inhibitrice ou formatrice de mousse, un agent de protection contre la corrosion, une encre, un colorant, un agent antistatique, un agent de contrôle de la viscosité ou un parfum. Ces différentes substances sont de préférence obtenues à partir de matière biologiques renouvelables.

De préférence, la composition de l'invention est compatible avec les matériaux utilisés dans les bandes transporteuses, tels que les éléments et guides réalisés en matière plastique ou en matière métallique, tel que de l'inox.

La composition de invention présente l'avantage de pouvoir être mise en contact avec des denrées alimentaires solides ou liquides et d'être également compatible avec différents produits désinfectants, dont les oxydants, aptes à permettre le maintien d'une bonne situation sanitaire de l'installation de transport traitée et limitant ainsi la prolifération de germes. Des tests organoleptiques ont aussi démontré l'absence d'impact d'une contamination due la composition lubrifiante sur les propriétés des boissons, en particulier de la bière.

L'invention concerne aussi l'utilisation de la composition lubrifiante de l'invention pour la lubrification de dispositifs de transport de contenants de boissons et qui s'effectue, de préférence, par pulvérisation sur des bandes de transports et des guides en matière plastique ou en en matière métallique, destinées au déplacement de ces contenants de boissons, en particulier de bouteilles, de barils ou de canettes, cette pulvérisation étant réalisée de manière continue ou de manière intermittente ou discontinue. Cette pulvérisation s'effectue, en particulier via des buses de section adéquate, avec ou sans l'application de moyens énergétiques, sous forme d'air comprimé ou de dispositifs de sonication (par génération d'ultrasons), de préférence via des buses à des pressions adéquates , en particulier d'environ 50 psi ou moins et au débit d'environ 25 ou d'environ 33 en pulvérisation 30/30 on/off à environ 0,2% volume ou en pulvérisation 15/85 on/off à environ 0,7% volume aptes à pulvériser la composition lubrifiante de l'invention sous forme de fines gouttelettes sur le support solide adéquat. De préférence, cette pulvérisation de la composition lubrifiante de l'invention est réalisée selon le cycle des étapes suivantes :
- pulvérisation de la composition lubrifiante de l'invention à environ 0,7 % pendant environ 30 secondes,
- absence de pulvérisation pendant environ 30 secondes,
- pulvérisation de la composition lubrifiante de l'invention à environ 0,4 % pendant environ 15 secondes,
- absence de pulvérisation pendant environ 85 secondes.

### Définitions

Les termes « pourcentage en poids » ou % wt correspondent à la concentration d'une substance, c'est-à-dire le poids de cette substance divisée par le poids total de la composition dans laquelle elle est présente et multipliée par 100. Sauf spécification contraire, la quantité d'un ingrédient présent dans la composition lubrifiante de l'invention correspondra à la quantité de cet ingrédient actif.

Le terme « environ » est employé afin d'inclure la variation numérique d'un mesure d'une substance ou d'un paramètre, relative à des erreurs de mesure et variable en fonction des outils de mesure utilisés ou en fonction de la variation de la pureté, de la source ou du moyen de production de la substance décrite. Généralement, cette variable peut être de plus ou de moins 10%, de préférence de plus ou de moins de 5% de la valeur mentionnée ou revendiquée.

### Exemple 1 :

Comparaison entre la composition lubrifiante de l'invention (exemple) et la composition - connue de l'état de la technique (exemple comparatif). Le tableau 1 ci-dessous présente les valeurs minimales et maximales en pourcentage en poids, de chacun des différents composants pouvant être présents dans la composition lubrifiante de l'invention et à laquelle a été ajoutée un pourcentage adéquat, d'environ 50% à environ 98, 8% d'eau, de préférence d'environ 60% à environ 98.5% d'eau, pour obtenir 100% en poids total de la composition lubrifiante revendiquée.

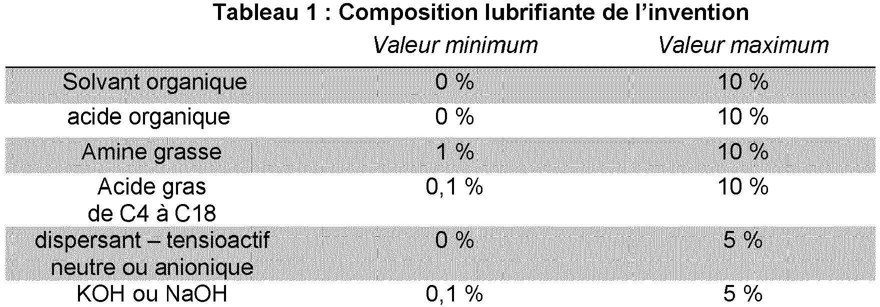

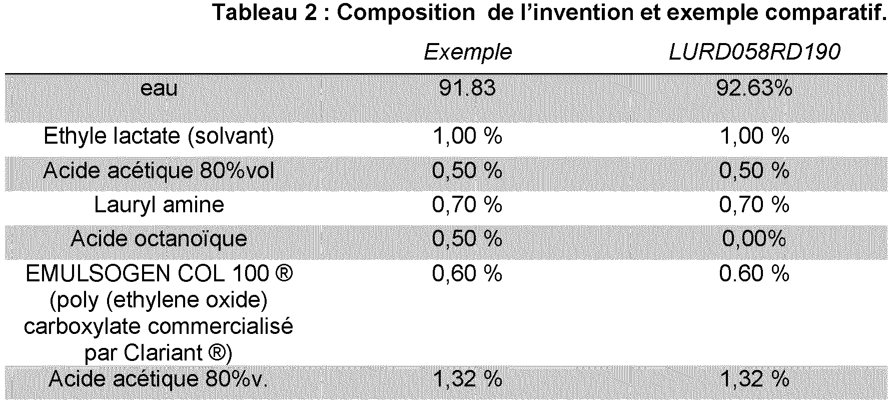

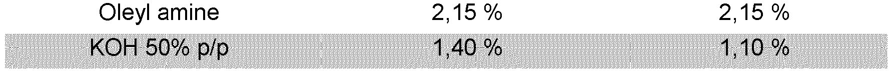

### METHODE D'EVALUATION

Aux fins d'évaluation de l'efficacité de la composition lubrifiante de l'invention, on détermine le coefficient de friction pour une charge donnée. Cette mesure présente une force de friction déterminée par un senseur de force en particulier un dynanomètre ou une jauge de force telle que commercialisée par Chatillon® et correspondra à une glissance ou un coefficient de friction compris entre 0.10N et 0.15N.

En dessous de la valeur de 0.10N, les bandes transporteuses n'assurent pas le déplacement des bouteilles et au-dessus de 0.15N, les contenants tombent au moindre choc

Dix litres d'une solution comparative sans acide gras d'une part (exemple comparatif dans le tableau 2), et d'autre part de la solution lubrifiante de l'invention telle que décrite dans l'exemple sont présentées dans le tableau 2, toutes deux, diluées à 0,7 % en volume dans de l'eau osmosée (0°fH ou degré français), sont appliqués par pulvérisation sur une bande de transport de bouteilles. La pulvérisation se fait « de manière discontinue ou intermittente » avec 15 secondes de pulvérisation et 85 secondes de non pulvérisation ou avec pulvérisation « continue » pulvérisation de 30 secondes à 30 secondes.

Les bouteilles sont ensuite déposées sur la bande transporteuse, ainsi traitée, qui est en mouvement. La durée totale du test est de 95 minutes.

Les 3000 premières secondes correspondent à l'installation du film lubrifiant sur la bande de transport.

Dans l'exemple de l'invention, on cherche à mesurer un coefficient de friction, via la poussée appliquée par des bouteilles de verre, avec une charge de 10 kg, sur le senseur de force, lors de la mise en mouvement d'une bande transporteuse en inox, c'est à dire générer une force inférieure à environ 20 N appliquée durant une période de 1200 secondes.

Entre 3000 secondes et 5500 secondes, on observe une stabilisation de la force appliquée.

Pour le test, on cible une différence de force inférieure à environ 2N entre 3000 secondes et 5500 secondes

Après environ 5500 secondes, l'aspersion est arrêtée et on analyse l'augmentation de la force appliquée sur le senseur de force ou dynamomètre, en ciblant une force inférieure à environ 20 N après environ 6600 secondes.

Les coefficients de friction entre les bouteilles de verre et la bande transporteuse en inox sont déterminés tout au long du test. Comme la friction diminue dans les premières minutes du test, le temps nécessaire à la mesure efficace en phase de test, est dénommée « conditionnement ». Une fois conditionnée, la bande transporteuse doit présenter une glissance ou un coefficient de friction compris entre 0.10 et 0.15. Le coefficient de friction communiqué correspond donc à la valeur obtenue en régime, c'est-à-dire après conditionnement. Les inventeurs ont mesuré les coefficients de friction en fonction du temps après pulvérisation des compositions de lubrification suivant l'exemple et suivant l'exemple comparatif, sur une bande transporteuse en inox. Ces résultats sont résumés dans le tableau 4. Dans le tableau 4, on présente la durée de l'étape de conditionnement qui correspondra à l'installation du film de glissance, la durée de fonctionnement normal et la durée non-aspersion qui mesure la résistance du film généré.

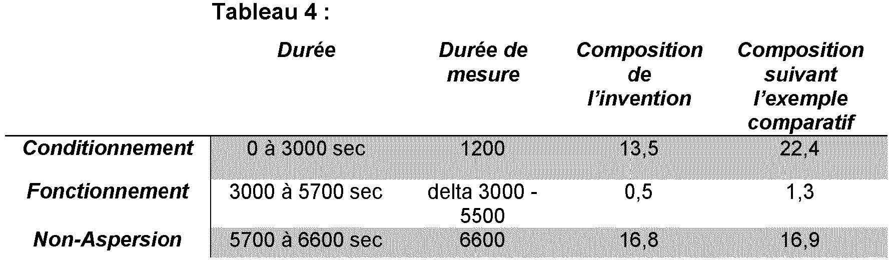

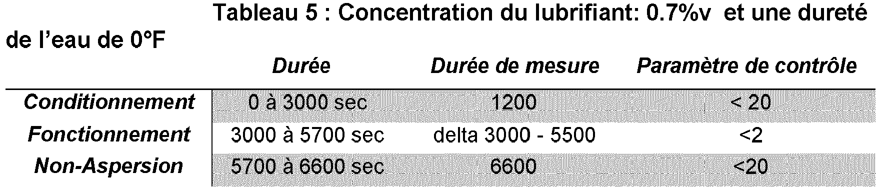

Les inventeurs ont constaté de manière inattendue une différence de performance, entre la composition selon l'invention et la composition de l'exemple comparatif, sans acide gras, dans la vitesse d'installation du film. Cette vitesse avec laquelle une glissance correcte est atteinte, dépendra de l'affinité de la composition lubrifiante pour la bande transporteuse, de préférence une bande en inox, en particulier après génération d'un film de la composition lubrifiante sur la bande transporteuse. Si ce film est homogène, les bouteilles seront stables et si ce film est assez épais, la glissance sera maintenue à un niveau adéquat pendant une période prolongée, de préférence de plusieurs heures, voire pendant plus de 24 heures, sans apport supplémentaire par pulvérisation de nouvelles quantités de composition lubrifiante. Il apparait aussi que, la formule de l'invention, contenant 2,85% en poids d'amine grasse et 0.7% en poids d'acide gras, apparait de manière inattendue plus performante qu'une solution de l'état de la technique (exemple comparatif), c'est-à-dire une composition sans acide gras et dont le % total avec les autres composants, y compris le solvant est de 100%.

## Revendications

1. Une composition lubrifiante comprenant :
- de 0,1 % à 10% en poids d'un premier acide organique qui est un acide gras contenant de 4 atomes de carbone à 18 atomes de carbone,
- de 1 % à 10% en poids d'une amine grasse contenant de 10 atomes de carbone à 26 atomes de carbone,
- de 0,1 % à 5 % en poids d'un correcteur d'acidité qui est une base choisie parmi le groupe constitué par NaOH, du KOH et leur mélange
- de 0,1 % à 10% en poids d'un dispersant,
- de 0,1% à 10% en poids d'un second acide organique,
- de 0,1% à 10 % en poids d'un solvant organique et
- de 50 % à 98,5 % en poids d'eau.

2. La composition selon la revendication 1, dans laquelle le rapport entre l'acide gras et l'amine grasse est compris entre 1/9 et 1/1.

3. La composition selon la revendication 1 ou la revendication 2, dans laquelle l'acide gras contient de 6 atomes de carbone à 12 atomes de carbone.

4. La composition selon l'un quelconque des revendications précédentes, dans laquelle l'acide gras est choisi parmi le groupe constitué par l'acide octanoïque, l'acide decanoïque, l'acide hexanoique, l'acide laurique et leur mélange.

5. La composition selon l'une quelconque des revendications précédentes, dans laquelle l'amine grasse contient de 12 atomes de carbone à 22 atomes de carbone et est de préférence choisie parmi le groupe constitué par les monoamines et les polyamines.

6. La composition selon l'une quelconque des revendications précédentes, dans laquelle l'amine grasse est choisie parmi le groupe constitué par l'amine lauryle, l'amine oleyle, la N-Oleyl-1,3-diaminopropane ou la N-Lauryl-1,3-diaminopropane et un mélange d'entre elles.

7. La composition selon l'une quelconque des revendications précédentes, dans laquelle le dispersant est choisi parmi le groupe constitué par les dispersants neutres et les dispersants anioniques et est de préférence choisi parmi le groupe constitué par du polysorbate, un alcool ethoxylé et carboxylé, un acide gras ethoxylé, un poly(ethyleneoxide) carboxylate, un ester carboxylique, en particulier un ester de saccharose et un mélange d'entre eux.

8. La composition selon l'une quelconque des revendications précédentes, dans laquelle le solvant organique est choisi parmi le groupe constitué par de l'ethyle lactate, du glycol, de l'alcool et un mélange d'entre eux.

9. La composition selon l'une quelconque des revendications précédentes dans laquelle le second acide organique est choisi parmi le groupe constitué par l'acide citrique, l'acide acétique, l'acide propionique, l'acide lactique et leur mélange.

10. Utilisation de la composition selon l'une quelconque des revendications précédentes, pour la lubrification de bandes transporteuses de contenants, de préférence choisis parmi le groupe constitué par des bouteilles, des barils ou des cannettes.

11. L'utilisation selon la revendication 10, dans laquelle la composition est administrée par pulvérisation de manière continue.

12. L'utilisation selon la revendication 10, par pulvérisation de manière intermittente.

13. L'utilisation selon la revendication 12, dans laquelle la pulvérisation s'effectue selon l'alternance suivante:
- pulvérisation d'une solution de la composition selon l'une quelconque des revendications précédentes 1 à 9, à 0,7% appliquée pendant une durée comprise entre 10 secondes et 50 secondes,
- absence de pulvérisation pendant une durée comprise entre 10 secondes et 50 secondes,
- pulvérisation d'une solution de la composition selon l'une quelconque des revendications précédentes 1 à 9, à 0,4% pendant une durée comprise entre 5 secondes et 30 secondes, et
- absence de pulvérisation pendant une durée comprise entre 50 secondes and 120 secondes.

## Patentansprüche

1. Schmierstoffzusammensetzung, umfassend:
- von 0,1 bis 10 Gew% einer ersten organischen Säure, wobei es sich um eine Fettsäure handelt, die von 4 Kohlenstoffatomen bis 18 Kohlenstoffatomen enthält,
- von 1 bis 10 Gew% eines Fettamins, das von 10 Kohlenstoffatomen bis 26 Kohlenstoffatomen enthält,
- von 0,1 bis 5 Gew% eines Säureregulators, wobei es sich um eine Base handelt, ausgewählt aus der Gruppe, bestehend aus NaOH, KOH und ihrer Mischung,
- von 0,1 bis 10 Gew% eines Dispergiermittels,
- von 0,1 bis 10 Gew% einer zweiten organischen Säure,
- von 0,1 bis 10 Gew% eines organischen Lösemittels, und
- von 50 bis 98,5 Gew% Wasser.

2. Die Zusammensetzung nach Anspruch 1, wobei das Verhältnis zwischen der Fettsäure und dem Fettamin im Bereich zwischen 1/9 und 1/1 liegt.

3. Die Zusammensetzung nach Anspruch 1 oder Anspruch 2, wobei die Fettsäure von 6 Kohlenstoffatomen bis 12 Kohlenstoffatomen enthält.

4. Die Zusammensetzung nach irgendeinem der vorhergehenden Ansprüche, wobei die Fettsäure ausgewählt ist aus der Gruppe, bestehend aus Octansäure, Decansäure, Hexansäure, Laurinsäure und ihrer Mischung.

5. Die Zusammensetzung nach irgendeinem der vorhergehenden Ansprüche, wobei die Fettsäure von 12 Kohlenstoffatomen bis 22 Kohlenstoffatomen enthält und vorzugsweise ausgewählt ist aus der Gruppe, bestehend aus Monoaminen und Polyaminen.

6. Die Zusammensetzung nach irgendeinem der vorhergehenden Ansprüche, wobei das Fettamin ausgewählt ist aus der Gruppe, bestehend aus Laurylamin, Oleylamin, N-Oleyl-1,3-diaminopropan, oder N-Lauryl-1,3-diaminopropan und einer Mischung aus ihnen.

7. Die Zusammensetzung nach irgendeinem der vorhergehenden Ansprüche, wobei das Dispergiermittel ausgewählt ist aus der Gruppe, bestehend aus neutralen Dispergiermitteln und anionischen Dispergiermitteln, und vorzugsweise ausgewählt ist aus der Gruppe, bestehend aus Polysorbat, einem ethoxylierten und carboxylierten Alkohol, einer ethoxylierten Fettsäure, einem Poly(ethyleneoxid)carboxylat, einem Carbonsäureester, insbesondere einem Saccharoseester und einer Mischung aus ihnen.

8. Die Zusammensetzung nach irgendeinem der vorhergehenden Ansprüche, wobei das organische Lösemittel ausgewählt ist aus der Gruppe, bestehend aus Ethyllactat, Glycol, Alkohol und einer Mischung aus ihnen.

9. Die Zusammensetzung nach irgendeinem der vorhergehenden Ansprüche, wobei die zweite organische Säure ausgewählt ist aus der Gruppe, bestehend aus Zitronensäure, Essigsäure, Propionsäure, Milchsäure und ihrer Mischung.

10. Verwendung der Zusammensetzung nach irgendeinem der vorhergehenden Ansprüche für die Schmierung von Behälterförderbändern, vorzugsweise ausgewählt aus der Gruppe, bestehend aus Flaschen, Fässern oder Spulen.

11. Die Verwendung nach Anspruch 10, wobei die Zusammensetzung durch Zerstäubung auf kontinuierliche Weise angewendet wird.

12. Die Verwendung nach Anspruch 10 durch Zerstäubung auf intermittierende Weise.

13. Die Verwendung nach Anspruch 12, wobei die Zerstäubung gemäß der folgenden alternierenden Abfolge durchgeführt wird:
- Zerstäubung einer Lösung der Zusammensetzung nach irgendeinem der vorhergehenden Ansprüche 1 bis 9, mit 0,7 % aufgebracht während einer Dauer im Bereich zwischen 10 Sekunden und 50 Sekunden,
- Abwesenheit der Zerstäubung während einer Dauer im Bereich zwischen 10 Sekunden und 50 Sekunden,
- Zerstäubung einer Lösung der Zusammensetzung nach irgendeinem der vorhergehenden Ansprüche 1 bis 9, mit 0,4 % während einer Dauer im Bereich zwischen 5 Sekunden und 30 Sekunden, und
- Abwesenheit der Zerstäubung während einer Dauer im Bereich zwischen 50 Sekunden und 120 Sekunden.

## Claims

1. A lubricant composition comprising:
- from 0.1% to 10 % by weight of a first organic acid that is a fatty acid having from 4 carbon atoms to 18 carbon atoms;
- from 1 % to 10 % by weight of a fatty amine having from 10 carbon atoms to 26 carbon atoms;
- from 0.1% to 5 % by weight of an acidity corrector that is a base selected from the group formed by NaOH, KOH and mixture thereof:
- from 0.1 % to 10 % by weight of a dispersant;
- from 0.1 % to 10 % by weight of a second organic acid;
- from 0.1 % to 10 % by weight of an organic solvent; and
- from 50 % to 98.5 % by weight of water.

2. The composition according to claim 1, wherein the ratio between the fatty acid and the fatty amine is between 1/9 and 1/1.

3. The composition according to claim 1 or claim 2, wherein the fatty acid has from 6 carbon atoms to 12 carbon atoms.

4. The composition according to any one of the preceding claims, wherein the fatty acid is selected from the group consisting of octanoic acid, decanoic acid, hexanoic acid, lauric acid and mixtures thereof.

5. The composition according to any one of the preceding claims, wherein the fatty amine has from 12 carbon atoms to 22 carbon atoms and is preferably selected from the group consisting of monoamines and polyamines.

6. The composition according to any one of the preceding claims, wherein the fatty amine is selected from the group consisting of lauryl amine, oleyl amine, N-Oleyl-1,3-diaminopropane or N-Lauryl-1,3-diaminopropane and a mixture thereof.

7. The composition according to any one of the preceding claims, wherein the dispersant is selected from the group consisting of neutral dispersants and anionic dispersants, and is preferably selected from the group consisting of polysorbate, an ethoxylated and carboxylated alcohol, an ethoxylated fatty acid, a poly(ethylene oxide) carboxylate, a carboxylic ester, in particular a sucrose ester and a mixture thereof.

8. The composition according to any one of the preceding claims, wherein the organic solvent is selected from the group consisting of ethyl lactate, glycol, alcohol and a mixture thereof.

9. The composition according to any one of the preceding claims, wherein the second organic acid is selected from the group consisting of citric acid, acetic acid, propionic acid, lactic acid and a mixture thereof.

10. Use of the composition according to any one of the preceding claims, for the lubrication of conveyor belts for containers, preferably selected from the group consisting of bottles, casks or cans.

11. The use according to claim 10, wherein the composition is dispensed by continuous spraying.

12. The use according to claim 10, by spraying intermittently.

13. The use according to claim 12, wherein spraying is performed with the following alternation:
- spraying a 0.7 % solution of the composition according to any one of the preceding claims 1 to 9, applied for a length of time of between 10 seconds and 50 seconds;
- no spraying for a length of time of between 10 seconds and 50 seconds;
- spraying a 0.4 % solution of the composition according to any one of the preceding claims 1 to 9, for a length of time of between 5 seconds and 30 seconds; and
- no spraying for a length of time of between 50 seconds and 120 seconds.
